# EUROPÄISCHE PATENTSCHRIFT

(11) **EP 1 538 191 B1**
(45) Veröffentlichungstag und Bekanntmachung des Hinweises auf die Patenterteilung: **31.08.2011**
(21) Anmeldenummer: 04090070.6
(22) Anmeldetag: 26.02.2004
(51) Int. Cl.: C10G 1/08, C10G 1/00, C10G 1/02, C10G 1/10, C10B 53/00, F24J 3/00

(54) **Dieselöl aus Reststoffen durch katalytische Depolymerisation mit dem Energieeintrag in einem Pumpen-Rührwerkssystem**
Diesel oil from residual materials by catalytic depolymerisation comprising energy input by means of a pump-stirrer system
Gazole obtenu à partir de déchets par dépolymérisation catalytique où l'apport d'énergie est réalisé par un système de pompe et de mélangeur

(30) Priorität: 02.12.2003 DE 10356245
(43) Veröffentlichungstag der Anmeldung: 08.06.2005
(73) Patentinhaber: AlphaKat GmBH, 96155 Buttenheim (DE)
(72) Erfinder: Koch, Christian, 96155 Buttenheim (DE)
(74) Vertreter: Kayser, Christoph

(56) Entgegenhaltungen:
- DE-A- 4 435 238
- DE-A- 10 049 377
- US-A- 2 105 191
- US-A- 2 764 147
- US-A- 4 781 151
- US-A- 5 849 964

## Beschreibung

Die Erfindung beinhaltet ein Verfahren zur katalytischen Molekülverkürzung von Kohlenwasserstoffen bei Temperaturen von 300 bis 400°C mit alkalisch dotierten Aluminiumsilikaten als Katalysator mit einem Energieeintrag überwiegend in Form einer Kombination von Pumpen und Rührwerken mit einer angeschlossenen Abscheidung mineralischer Begleitstoffe.

Bekannt ist die katalytische Depolymerisation mit einem speziellen Katalysator aus natriumdotierten Aluminiumsilikat aus dem Patent Nr. DE 10049377. Dabei wird mit dem Katalysator der kohlenwasserstoffhaltige Reststoff zu Diesel und Benzin gespalten. Die Beheizung für das Aufbringen der Spaltenergie, der Verdampfungsenergie des gespaltenen Kohlenwasserstoffes in Form von Diesel und Benzin und die Aufheizenergie, sowie die Wärmeverluste werden dabei durch die Beheizung durch die Wand aufgebracht.

Nachteil dieses Verfahrens ist die durch die Temperaturdifferenz durch die Wand notwendige Übertemperatur gegenüber der Reaktionstemperatur. Dadurch bildet sich immer etwas Reaktionskoks. Die Menge an Koks nimmt zu, wenn die Übertemperatur der Wand gegenüber dem Reaktionsgemisch ansteigt, d. h. wenn eine gewisse Produktionsleistung erreicht werden soll.

Dieser Reaktionskoks reagiert nun mit dem natriumdotierten Aluminiumsilikat zu einem nichtreaktiven Rückstand, der die Anlage verschmutzt und die Reaktion zum Erliegen bringt. Dieses Reaktionsgemisch von dem Katalysator und dem Reaktionskoks verbindet sich mit der Wand der Anlage zu einem harten Rückstand und erfordert einen hohen Reinigungsaufwand in den Wartungsintervallen. Die Erfindung beschreibt somit nur einen Prozess, nicht jedoch ein wirtschaftliches Verfahren.

Das wirtschaftliche Verfahren ist deshalb mit einer intensiven Beheizung der Wandung und damit aktiven Wärmeeintrag durch Beheizung durch die Wand nicht möglich. Die geringe Wärmeleitung des im Kreislauf befindlichen Reaktionsöles bedingt eine höhere Temperaturdifferenz zwischen der außen an der Wand befindlichen Beheizung zu der Reaktion im Öl, die die Spaltenergie (Depolymerisation), die Verdampfungsenergie und die Aufheizenergie benötigt.

In dem Ölkreislauf wird bei Altöl und Teeren je kg verdampften Diesels ca. 0,4 kWh Energie für die Spaltung, Verdampfung und Aufheizung von der Eingangstemperatur von 250°C auf die Reaktionstemperatur 390°C benötigt. Bei dem Eintrag von Kunststoffen ist die Energie fast doppelt so hoch, da diese kalt eingetragen werden und die Schmelzenergie zusätzlich gebraucht wird.

Überraschenderweise wurde nun ein Prozess des Wärmeeintrages und dazu angepasstes Katalysatorsystem gefunden, welche diese Nachteile vollkommen vermeiden. Das System transportiert nicht die Wärme durch die Wand, sondern setzt die Wärme direkt im Reaktionssystem frei.

Der Energieeintrag erfolgt dabei in einem System von Pumpe und gegenläufig betriebenen. Rührsystem mit Abscheidung des Dieseldampfes in einem Hochgeschwindigkeitshydrozyklon. Die Rührsysteme dienen dabei auch der vollständigen Reinigung der im Kreislauf angeordneten Oberflächen.

Auch der Katalysator wurde neu entwickelt. Nur für die Kunststoffe, Bitumen und Altöle wurde dabei die Dotierung eines volldurchkristallisierten Y-Moleküles mit Natrium als optimal ermittelt. Für die biologischen Einsatzstoffe, wie Fette und biologischen Öle wurde die Dotierung mit Kalzium als optimal entdeckt. Für die Umsetzung mit Holz ist die Dotierung mit Magnesium notwendig, um hochwertiges Diesel zu erzeugen. Für die hochhalogenhaltigen Stoffe, wie Trafoöl und PVC ist die Dotierung mit Kalium notwendig.

Das Produkt der Anlage ist Dieselöl, da der Produktaustrag aus dem Kreislauf bei 300-400°C keine anderen, leichteren Produkte im System belässt. Dieses Produkt wird zu 10 % für die Erzeugung der Prozessenergien in Form von Strom über ein Stromerzeugungsaggregat eingesetzt. Der Vorteil dieser Energieumwandlung ist die gleichzeitige Lösung der Probleme mit dem in der Anlage in geringen Mengen entstehenden Gas, das in die Ansaugluft geleitet wird und die Wärmeenergie der Auspuffgase, die für die Vortrocknung und Vorwärmung der Eingangsstoffe verwendet wird.

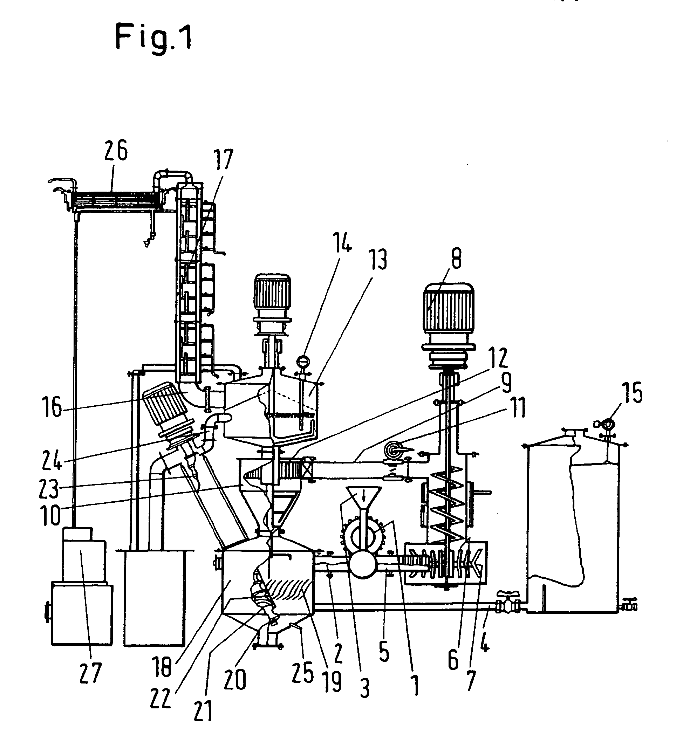

Figur 1 zeigt das Schema des erfindungsgemäßen Verfahrens. Mit 1 ist die Pumpe bezeichnet, die auf der Ansaugseite 2 den Materialeintrag 3und den Anschluss an das Kreislauföl 4 besitzt. Auf der Austragseite befindet sich die Druckleitung 5 die tangential in den Rührbehälter 6 mündet. Dort ist ein Rührwerk 7 mit einer gegenläufigen Drehrichtung drehend, angetrieben durch den Elektromotor 8. Das Rührwerk 7 hat zusätzliche nach oben gehende Reinigungsarme, die die gesamte Oberfläche des Rührbehälters bestreichen.

Der Rührbehälter 6 ist durch eine Verbindungsrohrleitung 9 mit einem Hydrozyklon 10 verbunden. In der Verbindungsrohleitung ist ein geregeltes Stellventil 11 angeordnet, welches den Druck in den nachfolgenden Apparaten regelt. In einer speziellen Ausführung ist in dieser Leitung auch eine weitere Pumpe angeordnet, die druckgeregelt über Frequenzumrichter mit der Pumpe 1 geregelt wird. Der Hydrozyklon 10 hat im Inneren eine an der Innenwand anliegende Venturidüse 12, die ebenfalls den verbleibenden Überdruck absenkt und die Abscheidewirkung erhöht.

Oberhalb des Hydrozyklons befindet sich ein Sicherheitsbehälter13 mit einer Füllstandsregelung 14 mit Ölstandsniveaumessung 15. Auf dem Sicherheitsbehälter 13 ist ein Rührwerk angeordnet, welches mit Elektromotor angetrieben wird und Reinigungsarme für den unteren Teil des Sicherheitsbehälters, dem Zyklon und dem unter dem Zyklon liegenden Behälter besitzt.

Seitlich an dem Sicherheitsbehälter 13 ist die Produktdampfleitung 16 für den erzeugten Dieseldampf zur Destillationsanlage 17 mit dem Kondensator 26. Der Kondensator 26 ist ein Röhrenbündelwasserkühler, dessen Wasser im Kühlkreislauf rückgekühlt wird.

In dem vorderen Teil des Kondensators 26 scheidet sich evtl. entstehendes Wasser ab, das über einen Leitfähigkeitssensor mit geregeltem Ablassventil separat abgeschieden wird, so dass in dem Produkt kein Wasser enthalten ist. Das Produkt

Diesel wird im oberen Teil der Kolonne über die obere Entnahme abgeleitet. Die Qualität des Diesels wird über die Refluxleitung über die Rückflussmenge geregelt.

Die Refluxleitung hat einen Anschluss an den Dieselvorratsbehälter des Stromgenerators 27, der die Anlage mit Strom versorgt. Dieser verbraucht ca. 10 % des erzeugten Diesels für die Eigenstromversorgung und erzeugt darüber hinaus die Wärme für die Vortrocknung und Vorwärmung der Öle durch das Auspuffgas des

Motors.

Alle Behälter sind zum Zwecke der Erleichterung der Anheizphase mit einer elektrischen Außenheizung versehen. Unterhalb des Hydrozyklons 10 befindet sich der Abscheidebehälter 18 mit den Schräglamellen 19, die für eine Separierung der nicht in Diesel umsetzbaren Bestandteile der Eingangsstoffe sorgen.

Dieser Abscheidebehälter 18 ist mit dem Ansaugrohr 2 verbunden. Am Boden des Abscheidebehälters 18 befindet sich eine Temperaturmessung 19, die die Austragschnecke 20 in Betrieb setzt, wenn die Temperatur durch Isolation mit dem

Reststoff unter einen Grenzwert in dem Temperaturmesser 25 absinkt.

Die Austragschnecke 20 besitzt einen Filterteil 21 innerhalb des Behälters, der die flüssigen Anteile durch das Filtersieb 22 in den Abscheidebehälter 18 zurückfließen lässt und einen elektrisch geheizten Schwelteil 23 außerhalb des Abscheidebehälters 18, der die restlichen Ölanteile aus dem Presskuchen verdampfen lässt. Dazu ist eine Temperaturerhöhung auf bis zu 600°C vorgesehen. Die aus der Schwelschnecke 23 entweichenden Öldämpfe gelangen über die Dampfleitung 24 in den Sicherheitsbehälter 13.

In einem Ausführungsbeispiel wird die Erfindung näher erläutert. Eine Kreiselpumpe mit 200 kW Antriebsleistung fördert über ein Ansaugleitung (2) 5.000 l/h Ansaugöl und über den Materialeintrag (3) 600 kg Reststoffe in Form von Altöl und Bitumen mit insgesamt 5.600 l/h in die Druckleitung (5) die tangential in den Rührbehälter (6) mit einem Durchmesser von 1.400 mm mündet. Dort ist ein Rührwerk 7 mit einer gegenläufigen Drehrichtung drehend, angetrieben durch den Elektromotor (8) mit 40 kW. Das Rührwerk (7) hat zusätzliche nach oben gehende Reinigungsarme, die die gesamte Oberfläche des Rührbehälters bestreichen, also sowohl des unteren Teiles des Rührbehälters mit 1400 mm, als auch dem oberen Teil mit einem Durchmesser von 500 mm.

Der Rührbehälter (6) ist durch eine Verbindungsrohrleitung (9) mit einem Durchmesser von 200 mm mit einem Hydrozyklon (10) verbunden. In der Verbindungsrohleitung ist ein geregeltes Stellventil (11) angeordnet, welches den Druck in den nachfolgenden Apparaten regelt. Der Hydrozyklon (10) hat einen Durchmesser von 1.000 mm und im Inneren eine an der Innenwand anliegende Venturidüse (12) mit einem engsten Querschnitt von 100 x 200 mm, die ebenfalls den verbleibenden Überdruck absenkt und die Abscheidewirkung erhöht.

Oberhalb des Hydrozyklons befindet sich ein Sicherheitsbehälter(13) mit einem Durchmesser von 2.000 mm einer Füllstandsregelung (14) mit Ölstandsniveaumessung (15). Auf dem Sicherheitsbehälter (13) ist ein Rührwerk angeordnet, welches mit Elektromotor mit 10 kW angetrieben wird und Reinigungsarme für den unteren Teil des Sicherheitsbehälters, dem Zyklon und dem unter dem Zyklon liegenden Behälter besitzt.

Seitlich an dem Sicherheitsbehälter (13) ist die Produktdampfleitung (16) für den erzeugten Dieseldampf zur Destillationsanlage (17) mit einem Kolonnendurchmesser von 500 mm. Alle Behälter sind zum Zwecke der Erleichterung der Anheizphase mit einer elektrischen Außenheizung mit einer Gesamtleistung von insgesamt 50 kW versehen.

Unterhalb des Hydrozyklons (10) befindet sich der Abscheidebehälter (18) mit 2.000 mm Durchmesser mit den Schräglamellen (19), die für eine Separierung der nicht in

Diesel umsetzbaren Bestandteile der Eingangsstoffe sorgen. Dieser Abscheidebehälter (18) ist mit dem Ansaugrohr (2) mit 200 mm Durchmesser verbunden. Am Boden des Abscheidebehälters (18) befindet sich eine Temperaturmessung (19), die die Austragschnecke (20) in Betrieb setzt, wenn die

Temperatur durch Isolation mit dem Reststoff unter einen Grenzwert absinkt.

Die Austragschnecke (20) mit einem Durchmesser von 80 mm und einer Förderleistung von 10 - 20 kg/h besitzt einen Filterteil (21) innerhalb des Behälters, der die flüssigen Anteile durch das Filtersieb (22) in den Abscheidebehälter (18) zurückfließen lässt und einen elektrisch geheizten Schwelteil (23) außerhalb des Abscheidebehälters (18) mit einer Heizleistung von 45 kW, der die restlichen Ölanteile aus dem Presskuchen verdampfen lässt. Dazu ist eine Temperaturerhöhung auf bis zu 600°C vorgesehen. Die aus der Schwelschnecke (23) entweichenden Öldämpfe gelangen über die Dampfleitung (24) in den Sicherheitsbehälter (13).

### Bezeichnungen der Figur 1

1. Pumpe für Energieeintrag
2. Ansaugseite der Pumpe
3. Materialeintrag (input)
4. Zufuhr Kreislauföl (input 2)
5. Druckleitung tangential
6. Rührbehälter
7. Rührwerk (gegenläufig zur Druckleitung tangential)
8. Elektromotor für Rührwerk
9. Verbindungsrohrleitung zu Hydrozyklon
10. Hydrozyklon
11. Stellventil zur Druckregulierung
12. Venturidüse im Hydrozyklon innen anliegend
13. Sicherheitsbehälter
14. Füllstandsregelung,
15. Niveauanzeige und Regelung
16. Produktdampfleitung
17. Destillationsanlage
18. Abscheidebehälter
19. Schräglamellen im Abscheidebehälter
20. Austragschnecke
21. Filterteil der Austragschnecke
22. Filtersieb des Filterteiles der Austragschnecke
23. Schwelteil der Austragschnecke (bis 600°C)
24. Schweldampfleitung zum Sicherheitsbehälter
25. Temperaturmessung unterhalb der Feststoffabscheidung
26. Kondensator
27. Stromgenerator

## Patentansprüche

1. Verfahren zur Erzeugung von Dieselöl durch eine katalytische Molekülverkürzung aus kohlenstoffhaltigen Reststoffen mittels eines alkalisch dotierten Aluminiumsilikats als Katalysator bei Temperaturen von 300-400°C, wobei zuerst ein Materialeintrag (3) und ein Kreislauföl (4) über eine Pumpe (1) tangential in einen Rührbehälter (6) zugeführt werden,
und mit den weiteren Verfahrensschritten einer Feststoffabscheidung (10) und einer Produktdestillation (17),
wobei der Hauptenergieeintrag für die Haupterwärmung über ein System erzeugt wird, das eine Strömungsenergie der wenigstens einen Pumpe (1) durch ein in dem Rührbehälter (6) betriebenes Rührwerk (7) mit einer der tangentialen Zuführung gegenläufigen Drehrichtung in Wärme umwandelt.

2. Verfahren nach Anspruch 1,
**dadurch gekennzeichnet,**
**dass** der Katalysator aus alkalisch dotiertem Aluminiumsilikat dotiert ist mit einem Element ausgewählt aus der Gruppe bestehend aus Kalium, Kalzium oder Magnesium.

3. Verfahren nach Anspruch 2,
**dadurch gekennzeichnet,**
**dass** ein mit Kalzium dotiertes Aluminiumsilikat als Katalysator für Reststoffen aus biologische Ersatzstoffe, wie Fette und biologische Öle, eingesetzt wird.

4. Verfahren nach Anspruch 2,
**dadurch gekennzeichnet,**
**dass** ein mit Magnesium dotiertes Aluminiumsilikat als Katalysator für Reststoffe aus Holz verwendet wird.

5. Verfahren nach Anspruch 2,
**dadurch gekennzeichnet,**
**dass** ein mit Kalium dotiertes Aluminiumsilikat als Katalysator für hochhalogenhaltige Reststoffe, wie Trafoöl und PVC, eingesetzt wird.

6. Verfahren nach einem der vorstehenden Ansprüche,
**dadurch gekennzeichnet,**
**dass** eine Temperatur- und Füllstandsregelung bereitgestellt wird, die miteinander vernetzt sind, wobei Zufuhr- und Eintragsystem so gesteuert werden, dass ein Füllstand im Rührbehälter beibehalten wird.

## Claims

1. A method for producing diesel oil, by catalytic molecule shortening, from carbon-containing residual materials by means of an alkali-doped aluminium silicate as a catalyst at temperatures of 300-400 °C,
wherein a material supply (3) and a cycle oil (4) are first fed tangentially via a pump (1) into an agitator vessel (6),
said method comprising the further method steps of solid material separation (10) and product distillation (17),
the primary energy supply for the primary heating process being generated via a system which converts a flow energy of the at least one pump (1) into heat by a stirrer (7) which is operated in the agitator vessel (6) and rotates in a direction opposite to the tangential feed.

2. The method according to claim 1,
**characterised in that**
the catalyst formed of alkali-doped aluminium silicate is doped with an element selected from the group consisting of potassium, calcium or magnesium.

3. The method according to claim 2,
**characterised in that**
an aluminium silicate doped with calcium is used as a catalyst for residual materials formed of biological substitute materials, such as fats and biological oils.

4. The method according to claim 2,
**characterised in that**
an aluminium silicate doped with magnesium is used as a catalyst for residual materials formed of wood.

5. The method according to claim 2,
**characterised in that**
an aluminium silicate doped with potassium is used as a catalyst for halogen-rich residual materials, such as transformer oil and PVC.

6. The method according to any one of the preceding claims,
**characterised in that**
temperature and fill level controls are provided which are networked to one another, feed and supply systems being controlled in such a way that a fill level is maintained in the agitator vessel.

## Revendications

1. Procédé de production de gazole en soumettant des matières résiduelles carbonées à un raccourcissement catalytique de leurs chaînes moléculaires, un silicate d'aluminium dopé aux substances alcalines étant mis en oeuvre en tant que catalyseur à des températures de 300 à 400 °C,
une charge (3) et une huile de circulation (4) étant, dans un premier temps, introduites tangentiellement à travers une pompe (1) dans un récipient sous agitation (6),
et avec les étapes de procédé ultérieures d'une séparation des matières solides (10) et d'une distillation du produit (17),
l'apport principal en énergie, destiné au réchauffement principal, étant réalisé à travers un système qui transforme, par un dispositif d'agitation (7) fonctionnant au sein du récipient sous agitation (6) et tournant dans un sens opposé à l'introduction tangentielle, une énergie de flux issue de l'au moins une pompe (1) en chaleur.

2. Procédé selon la revendication 1,
**caractérisé en ce que**
ledit catalyseur en silicate d'aluminium dopé aux substances alcalines est dopé avec un élément choisi dans le groupe constitué de potassium, de calcium ou de magnésium.

3. Procédé selon la revendication 2,
**caractérisé en ce que**
l'on met en oeuvre un silicate d'aluminium dopé au calcium en tant que catalyseur pour des matières résiduelles issues de matières biologiques de remplacement telles que les graisses et les huiles biologiques.

4. Procédé selon la revendication 2,
**caractérisé en ce que**
l'on utilise un silicate d'aluminium dopé au magnésium en tant que catalyseur pour des matières résiduelles issues du bois.

5. Procédé selon la revendication 2,
**caractérisé en ce que**
l'on met en oeuvre du silicate d'aluminium dopé au potassium en tant que catalyseur pour des matières résiduelles à haute teneur en halogènes telles que l'huile de transformateur et le PVC.

6. Procédé selon l'une des revendications précédentes,
**caractérisé en ce que**
l'on met à disposition une régulation de la température et du niveau de remplissage qui sont interconnectées, le système d'alimentation et d'introduction étant commandé de façon à ce qu'un niveau de remplissage soit maintenu dans le récipient sous agitation.
